# EUROPÄISCHE PATENTSCHRIFT

(11) **EP 2 238 180 B1**
(45) Veröffentlichungstag und Bekanntmachung des Hinweises auf die Patenterteilung: **04.04.2012**
(21) Anmeldenummer: 09704779.9
(22) Anmeldetag: 21.01.2009
(51) Int. Cl.: C08F 220/06, C08F 222/04, C08K 5/00, C08J 9/00

(54) **SCHÄUMBARE COPOLYMERE AUF BASIS NACHWACHSENDER ROHSTOFFE**
FOAMABLE COPOLYMERS BASED ON RENEWABLE RAW MATERIALS
COPOLYMÈRES APTES AU MOUSSAGE À BASE DE MATIÈRES PREMIÈRES RENOUVELABLES

(30) Priorität: 23.01.2008 EP 08150529
(43) Veröffentlichungstag der Anmeldung: 13.10.2010
(73) Patentinhaber: BASF SE, 67056 Ludwigshafen (DE)
(72) Erfinder: AULENTA, Francessa, 68165 Mannheim (DE); BRAUN, Markus, 69118 Heidelberg (DE); SCHNELLER, Arnold, 67227 Frankental (DE); DYLLICK-BRENZINGER, Rainer, 67435 Neustadt (DE)
(86) Internationale Anmeldenummer: PCT/EP2009/050609
(87) Internationale Veröffentlichungsnummer: WO 2009/092714

(56) Entgegenhaltungen:
- WO-A-97/45491
- "Foams of poly (acrylic acid or acrylamide)" STN CHEMICAL ABSTRACTS, XX, XX, 27. August 1965 (1965-08-27), XP008108183 in der Anmeldung erwähnt

## Beschreibung

Die Erfindung betrifft ein Verfahren zur Herstellung von schäumbaren Copolymeren, die schäumbaren Copolymeren selbst sowie schaumförmige Polymergebilde.

Verfahren zum Schäumen von Thermoplasten und schäumbare thermoplastische Zusammensetzungen, die zum Einsatz in derartigen Verfahren geeignet sind, sind bekannt. Die Schäumungsverfahren, um eine geschäumte Struktur zu erhalten, umfassen typischerweise das Schmelzen des thermoplastischen Harzes, das Einbringen eines Gases (Treibmittel) oder einer Gasquelle (zum Beispiel chemisches Treibmittel) in das Harz vor oder nach dem Schmelzen und dann Extrudieren des geschmolzenen Thermoplasten durch eine Düse. In expandierbaren Polystyrolprodukten kommen physikalische Treibmittel wie Pentan zum Einsatz, das während der Lagerung aus der Polymermatrix diffundieren kann, wodurch eine entzündliche bzw. explosive Atmosphäre entstehen kann. Der Einsatz von unbrennbaren, polymergebundenen und polymerisierbaren Treibmitteln vermeidet derartige Risiken und bringt erhebliche sicherheitstechnische und ökonomische Vorteile mit sich.

Die selbst-initiierte Freisetzung des Treibmittels (beispielsweise von CO₂) ist eine etablierte Methode für die Herstellung von Schäumen auf Basis von Polyurethan, Polyharnstoffen, Polycarbonaten, Organopolysiloxanen, Polyestern, Polyamiden, Polyimiden, Polyacetalschäumen und schäumbaren Polyphenol-basierten Harzen. Die Decarboxylierung instabiler Carbonsäuren oder instabiler Anhydride, die in der Polymermatrix gebunden sind, ist in einer Vielzahl von Druckschriften beschrieben.

EP 0 850 981 A1 beschreibt ein Verfahren zur Herstellung von Wasser absorbierenden, schaumförmigen Polymeren, deren Schaum durch Decarboxylierung von organischen Verbindungen wie Zitronensäure, die in einem Perfluorpolymer enthalten sind, gebildet wird.

B. E. Tate in [B.E. Tate, Advanced Polymer Science, 1967, 5, 214 bis 232] lehrt, dass Polymere und Copolymere bestehend aus Itaconsäure und Acrylsäure oder Itaconsäure, Styrol und Vinylacetat unter milden Temperaturbedingungen von etwa 100 °C langsam decarboxylieren.

JP 419192 beschreibt den Einsatz von copolymerisierbarer Itaconsäure als Treibmittel für die Herstellung von Polyacrylamid- und Polyacrylsäure-basierten Schäumen.

Es besteht die Aufgabe, schäumbare Copolymere zur Verfügung zu stellen, welche die aus dem Stand der Technik bekannten Nachteile nicht aufweisen. Weiterhin besteht die Aufgabe, ein Verfahren zur Herstellung von schäumbaren Copolymeren sowie von schaumförmigen Polymergebilden zur Verfügung zu stellen.

Diese Aufgabe wird gelöst durch schäumbare Copolymere erhältlich aus der Umsetzung von
(a) zumindest einem Reaktionsgemisch enthaltend zumindest ein durch radikalische Copolymerisation einer oder mehrerer monoethylenisch ungesättigter monomeren Verbindung(en) oder deren Anhydrid(e) (Monomere A1) mit einer oder mehreren Verbindung(en) ausgewählt aus der Gruppe Itaconsäure, Mesaconsäure, Fumarsäure, Maleinsäure, Aconitsäure, Glutaconsäure sowie deren Salzen, Estern und Anhydriden (Monomere A2) erhaltenes Copolymer
   mit
(b) einem oder mehreren Vernetzern.

Es stellt sich nämlich im Rahmen der Untersuchungen der schäumbaren Copolymere überraschend heraus, dass es sich bei den erfindungsgemäßen schäumbaren Copolymeren um ein im Vergleich zu Styropor nahezu unbegrenzt lagerfähiges Material handelt, welches bei Bedarf geschäumt werden kann.

Als Monomere A1 kommen prinzipiell alle ethylenisch ungesättigten Monomere in Betracht, welche mit den Monomeren A2 radikalisch copolymerisierbar sind, wie beispielsweise ethylenisch ungesättigte, insbesondere α,β-monoethylenisch ungesättigte C3- bis C6-, bevorzugt C3- oder C4-Mono- oder Dicarbonsäuren sowie deren wasserlöslichen Salze, insbesondere deren Alkalimetall- oder Ammoniumsalze, wie beispielsweise Acrylsäure, Methacrylsäure, Ethylacrylsäure, Allylessigsäure, Crotonsäure, Vinylessigsäure, Fumarsäure, Maleinsäure, Maleinsäureanhydrid, Methylmaleinsäure sowie die Ammonium-, Natrium- oder Kaliumsalze der vorgenannten Säuren.

Daneben kommen als Monomere A1 beispielsweise auch vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, - decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie C4-8-konjugierte Diene, wie 1,3-Butadien (Butadien) und Isopren in Betracht. Weiterhin kommen als Monomere A1 solche ethylenisch ungesattigten Monomere in Betracht, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N Dimethylamino)ethylmethacrylat, 2-(N,N-Diethylamino)ethylacrylat, 2-(N,NDiethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat, Glycidylacrylat.

Vorzugsweise finden als monoethylenisch ungesättigte monomere Verbindungen oder gegebenenfalls deren Anhydride oder Ester Styrol, α-Methylstyrol, o-Chlorstyrol, Vinylchlorid, Vinylidenchlorid, Vinylacetat, Vinylpropionat, Vinyl-n-butyrat, Vinyllaurat, Vinylstearat, Itaconsäure, Acrylnitril, Methacrylnitril, Fumarsäuredinitril, Maleinsäuredinitril, 1,3-Butadien (Butadien), Isopren, Acrylamid und Methacrylamid, Vinylsulfonsäure, Acrylsäure, Methacrylsäure, Maleinsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Citraconsäure, Aconitsäure, Fumarsäure, Tricarboxyethylen- und Maleinsäureanhydrid, wobei Acrylsäure sowie Methacrylsäure, Styrol und Methyl(meth)acrylat besonders bevorzugt sind, Verwendung.

Als Monomere A 2 kommen Itaconsäure, Mesaconsäure, Fumarsäure, Maleinsäure, Aconitsäure, Glutaconsäure sowie deren Salze, Anhydride und/oder Alkylester in Betracht. Dabei sollen unter Alkylester sowohl die entsprechenden Monoalkylester, wie auch die Di- bzw. Trialkylester, insbesondere die entsprechenden C₁-C₂₀-Alkylester, bevorzugt die Mono- oder dimethyl bzw. -ethylester verstanden werden. Selbstverständlich sollen auch die entsprechenden Salze der vorstehend genannten Säuren, wie beispielsweise die Alkalimetall-, Erdalkalimetall oder die Ammoniumsalze, insbesondere die entsprechenden Natrium-, Kalium oder Ammoniumsalze erfindungsmäßig umfasst sein. Gemäß einer bevorzugten Ausführungsform der Erfindung wird Itaconsäure oder Itaconsäureanhydrid eingesetzt, wobei jedoch Itaconsäure insbesondere bevorzugt ist.

Das Reaktionsgemisch (a) enthält 0,1 bis 70 Gew.-%, bevorzugt 1 bis 50 Gew.-% und insbesondere bevorzugt 1 bis 25 Gew.-%, wenigstens eines Monomeren A2 in einpolymerisierter Form.

Gemäß einer bevorzugten Ausführungsform liegt das Verhältnis der monoethylenisch ungesättigten Verbindung (Monomere A1) zu der einen oder den mehreren Verbindungen ausgewählt aus der Gruppe Itaconsäure, Mesaconsäure, Glutaconsäure, Fumarsäure, Maleinsäure, Aconitsäure sowie deren Salzen, Estern und Anhydriden (Monomere A2) im Bereich von 1 bis 50 Gew.-% wenigstens eines Monomeren A2, und 50 bis 99 Gew.-% wenigstens eines Monomeren A1 und mit besonderem Vorteil 1 bis 25 Gew.-% wenigstens eines Monomeren A2, und 75 bis 99 Gew.-% wenigstens eines Monomeren A1. Dabei sind die Angaben in Gewichtsprozent jeweils auf das gesamte Copolymer bezogen.

Der K-Wert des in dem Reaktionsgemisch (a), bestimmt nach Fikenscher, siehe Seite 15, enthaltenen Copolymers beträgt (1%ig in entionisiertem Wasser) typischerweise 19 bis 80, vorzugsweise 30 bis 50, besonders bevorzugt 32 bis 38. Das zahlenmittlere Molekulargewicht der in dem Reaktionsgemisch (a) enthaltenen Copolymere beträgt 15.000 bis 5.000.000 g/Mol, bevorzugt 150.000 bis 600.000 g/Mol, besonders bevorzugt 300.000 bis 400.000 g/Mol, insbesondere bevorzugt 300.000 bis 400.000 g/Mol.

Erfindungsgemäß bevorzugte Vernetzer des Merkmals (b) sind Verbindungen, die mindestens zwei funktionelle Gruppen aufweisen, die mit freien funktionellen Gruppen der in dem Reaktionsgemisch (a) enthaltenen Copolymere in einer Kondensationsreaktion oder in einer Additionsreaktion reagieren können.

Als Vernetzer des Merkmals (b) seien als Beispiele genannt Polyole, beispielsweise Ethylenglykol, Polyethylenglykol wie Diethylenglykol, Triethylenglykol und Tetraethylenglykol, Propylenglykol, Polypropylenglykol wie Dipropylenglykol, Tripropylenglykol oder Tetrapropylenglykol, 1,3-Butandiol, 1,4-Butandiol, 1,5-Pentandiol, 2,4-Pentandiol, 1,6-Hexandiol, 2,5-Hexandiol, Glycerin, Polyglycerin, Trimethylolpropan, Polyoxypropylen, Oxyethylenoxypropylen-Blockcopolymere, Sorbitanfettsäureester, Polyoxyethylensorbitanfettsäureester, Pentaerythrit, Polyvinylalkohol und Sorbitol, Aminoalkohole, beispielsweise Ethanolamin, Diethanolamin, Triethanolamin oder Propanolamin, Polyaminverbindungen, beispielsweise Ethylendiamin, Diethylentetraamin, Triethylentetraamin, Tetraethylenpentamin oder Pentaethylenhexaamin, N,N,N,N-tetrakis(2-Hydroxyethyl)ethylendiamin (THEED), N,N,N,N-tetrakis(2-Hydroxyethyl)adipamid (THEAA), Triisopropanolamin (TRIPA), Polyglycidether-Verbindungen wie Ethylenglykoldiglycidylether, Polyethylenglykoldiglycidylether, Glycerinpolyglycidylether, Pentaerithrytpolyglycidylether, Propylenglykoldiglycidylether, Polypropylenglykoldiglycidylether, Neopentylglykoldiglycidylether, Hexandiolglycidylether, Trimethylolpropanolglycidylether, Sorbitolpolyglycidylether, Phthalsäurediglycidylether, Adipinsäurediglycidylether, Glycidol, Polyisocyanate, vorzugsweise Diisocyanate wie 2,4-Toluoldiisocyanat und Hexamethylendiisocyanat, Polyaziridinverbindungen wie 2,2-bis-Hydroxymethylbutanol-tris[3-(1-aziridinyl)propionat], 1,6-Hexamethylendiethylenharnstoff und Diphenylmethan-bis-4,4'-N,N'-diethylenharnstoff, Halogenperoxide wie Epichlor- und Epibromhydrin und α-Methylepichlorhydrin, Alkylencarbonate wie 1,3-Dioxolan-2-on(ethylencarbonat), 4-Methyl-1,3-dioxolan-2-on(propylencarbonat), polyquartäre Amine wie Kondensationsprodukte von Dimethylaminen und Epichlorhydrin, Di-, Tri- und Polyamine sowie Polyolverbindungen mit wenigstens zwei Hydroxylgruppen.

Dabei kann die Polyolverbindung, nachfolgend Polyol genannt, prinzipiell eine Verbindung mit einem Molekulargewicht ≤ 1000 g/mol oder eine polymere Verbindung mit einem Molekulargewicht > 1000 g/mol sein. Als polymere Verbindungen mit wenigstens 2 Hydroxylgruppen seien beispielhaft Polyvinylalkohol, teilhydrolysiertes Polyvinylacetat, Homo- oder Copolymerisate von Hydroxyalkylacrylaten oder Hydroxyalkylmethacrylaten, wie beispielsweise Hydroxyethylacrylat bzw. -methacrylat oder Hydroxypropylacrylat bzw. - methacrylat genannt. Beispiele weiterer polymerer Polyole finden sich u.a. in WO 97/45461, Seite 3, Zeile 3 bis Seite 14, Zeile 33.

Als Polyol mit einem Molekulargewicht ≤ 1000 g/mol kommen alle die organischen Verbindung in Betracht, die wenigstens 2 Hydroxylgruppen und ein Molekulargewicht ≤ 1000 g/mol aufweisen. Beispielhaft genannt seien Ethylenglykol, 1,2-Propylenglykol, Glyzerin, 1,2- bzw. 1,4-Butandiol, Pentaerythrit, Trimethylolpropan, Sorbit, Saccharose, Glucose, 1,2-, 1,3- bzw. 1,4-Dihydroxybenzol, 1,2,3-Trihydroxybenzol, 1,2-, 1,3- bzw. 1,4-Dihydroxycyclohexan sowie bevorzugt Alkanolamine, wie beispielsweise Verbindungen der allgemeinen Formel I 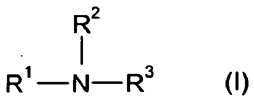 in der R² für ein H-Atom, eine C₁-C₁₀-Alkylgruppe oder eine C₂-C₁₀-Hydroxyalkylgruppe steht und R² und R³ für eine C₂-C₁₀-Hydroxyalkylgruppe stehen.

Besonders bevorzugt stehen R² und R³ unabhängig voneinander für eine C₂- bis C₅-Hydroxyalkylgruppe und R¹ für ein H-Atom, eine C1- bis C5-Alkylgruppe oder eine C₂-bis C₅-Hydroxyalkylgruppe.

Als Verbindungen der Formel I seien insbesondere Diethanolamin, Triethanolamin, Diisopropanolamin, Triisopropanolamin, Methyldiethanolamin, Butyldiethanolamin und/oder Methyldiisopropanolamin genannt.

Beispiele weiterer Polyole mit einem Molekulargewicht ≤ 1000 g/mol finden sich ebenfalls in WO 97/45461, Seite 3, Zeile 3 bis Seite 14, Zeile 33.

Bevorzugt wird das Polyol ausgewählt aus der Gruppe umfassend Diethanolamin, Triethanolamin, Diisopropanolamin, Triisopropanolamin, Methyldiethanolamin, Butyldiethanolamin und/oder Methyldiisopropanolamin, wobei Triethanolamin besonders bevorzugt ist.

Besonders bevorzugt als Vernetzer sind Triethanolamin, N,N,N,N-tetrakis(2-Hydroxyethyl)ethylendiamin, und Triisopropanolamin.

Allgemein werden das Reaktionsgemisch (a) und der Vernetzer des Merkmals (b) bevorzugt in einem solchen Mengenverhältnis zueinander eingesetzt, dass das Gewichtsverhältnis von Reaktionsgemisch zu Vernetzer 1:10 bis 100:1, vorteilhaft 1:5 bis 50:1 und insbesondere vorteilhaft 1:1 bis 20:1 beträgt.

Es ist bevorzugt, dass der oder die Vernetzer (b) in einer Menge in einem Bereich von 5 bis 65 Gew.-%, bevorzugt in einem Bereich von 20 bis 60 Gew.-%, besonders bevorzugt in einem Bereich von 20 bis 30 Gew.-%, jeweils bezogen auf das gesamte Copolymere eingesetzt werden.

Die efindungsgemäßen schäumbaren Copolymere sind allgemein erhältlich durch Umsetzung von zumindest einer Komponente (a) und zumindest einer Komponente (b). Darüber hinaus können jedoch noch weitere Komponenten bei der Umsetzung der Komponenten (a) und (b) eingesetzt werden. Beispielsweise ist es vorteilhaft, die Umsetzung der Komponenten (a) und (b) in Gegenwart eines Nukleierungsmittels durchzuführen. Durch geeignete Auswahl des Nukleierungsmittels lassen sich die Struktur der Schäume, Porengrößen und die Porenverteilung je nach Anwendungszweck des jeweiligen Schaumes variieren. Als Nukleierungsmittel werden vorzugsweise Talkum (Magnesiumsilikat), Magnesiumcarbonat, Calciumcarbonat, Huntit, Hydromagnesit und KMgAI-Silikate oder deren Mischungen eingesetzt. Insbesondere bevorzugt ist das Nukleierungsmittel Talkum.

Die weiteren Komponenten wie die Nukleierungsmittel werden in dem Reaktionsgemisch umfassend (a) und (b) in einer Menge in einem Bereich von 0,1 bis 5 Gew.-%, bevorzugt in einer Menge in einem Bereich von 0,5 bis 2 Gew.-%, besonders bevorzugt in einer Menge im Bereich von 1 bis 1,5 Gew.-%, bezogen auf die Gesamtmasse der Reaktanden, eingesetzt.

Die erfindungsgemäßen schäumbaren Copolymere zeichnen sich in vorteilhafter Weise dadurch aus, dass bedingt durch die unvollständig ablaufende Vernetzungsreaktion ein Teil der Carbonsäuregruppen in freier Form im Polymer verbleibt, worin die Hydrophilie der erfindungsgemäßen Copolymere begründet ist. Die hydrophilen Eigenschaften der Copolymere lassen sich durch Variation des Itaconsäureanteils, der Natur und Konzentration des Vernetzers und/oder durch Zumischung weiterer Polymere regulieren. Bei den weiteren Polymeren handelt es sich dabei um Polystyrol, Polyester, Thermoplaste, Polyamide, sowie um Mischungen mehrerer der vorstehend genannten Polymere.

Während der Schäumung des erfindungsgemäßen schäumbaren Copolymers zersetzt sich das im Polymer gebundene potentielle Treibmittel durch Decarboxylierung der freien Carboxylgruppen der Itaconsäure, Mesaconsäure, Fumarsäure, Maleinsäure, Aconitsäure bzw. Glutaronsäure. Die Decarboxylierung setzt CO₂ in hinreichender Menge frei, um das Aufschäumen der erfindungsgemäßen Copolymere zu bewirken. So stellen die erfindungsgemäßen Copolymere ihr eigenes Treibmittel bereit und sind in diesem Sinne gewissermaßen "selbstschäumend". Die durch Aufschäumen der erfindungsgemäßen Copolymere erhaltenen Schäume bzw. schaumförmigen Polymergebilde zeichnen sich durch eine Dichte im Bereich von 40 bis 300 g/l, bevorzugt im Bereich von 50 bis 200 g/l aus. Die Wärmeleitfähigkeit der erhaltenen Schäume bzw. schaumförmigen Polymergebilde liegt allgemein im Bereich von 0,04 W/mK bis 0,09 W/mK. Im Rahmen der Beispiele wurden Schäume bzw. schaumförmigen Polymergebilde deren Wärmeleitfähigkeit bei 0,0467 W/mK (Verwendung von THEED als Vernetzer), 0,079 W/mK (Verwendung von TEA als Vernetzer) und 0,0575 W/mK (Verwendung von TiPA als Vernetzer) lag.

Die Erfindung betrifft ferner ein Verfahren zur Herstellung der erfindungsgemäßen schäumbaren Copolymere enthaltend die Schritte:
(i) Herstellung zumindest eines Reaktionsgemisches (a) durch radikalische Copolymerisation einer oder mehrerer monoethylenisch ungesättigter monomeren Verbindung(en) (Monomere A1) mit einer oder mehreren Verbindung(en) ausgewählt aus der Gruppe bestehend aus Itaconsäure, Mesaconsäure, Glutaconsäure, Fumarsäure, Maleinsäure und Aconitsäure sowie deren Salzen, Estern und Anhydriden (Monomere A2), und
(ii) Umsetzung von zumindest einem der in Schritt (i) erhaltenen Copolymere mit einem oder mehreren Vernetzer(n).

Die Herstellung des Reaktionsgemisches in Schritt (i) kann nach verschiedenen, dem Fachmann bekannten radikalischen Polymerisationsverfahren erfolgen. Bevorzugt ist die radikalische Polymerisation in homogener Phase, insbesondere in wässriger Lösung als sogenannte Gel-Polymerisation oder die Polymerisation in einem organischen Lösungsmittel. Weitere Möglichkeiten sind die Fällungs-Polymerisation aus organischen Lösungsmitteln, beispielsweise aus Alkoholen oder die Suspensions-, Emulsions- oder Mikroemulsions-Polymerisation. Bei der Polymerisation können neben den Polymerisationsinitiatoren weitere Adjuvantien, beispielsweise Kettenregler wie Mercaptoethanol, eingesetzt werden.

Die radikalische Polymerisation in Schritt (i) erfolgt üblicherweise in Gegenwart von Radikale bildenden Verbindungen, sogenannten Initiatoren.

Derartige Radikale bildende Verbindungen werden üblicherweise in Mengen von bis zu 30 Gew.-%, vorzugsweise 0,05 bis 15 Gew.-%, insbesondere 0,2 bis 8 Gew.-%, bezogen auf die zu polymerisierenden Ausgangsstoffe eingesetzt. Bei aus mehreren Bestandteilen bestehenden Initiatoren (Initiatorsysteme z. B. Redox-Initiatorsystemen) beziehen sich die vorstehenden Gewichtsangaben auf die Summe der Komponenten.

Geeignete Initiatoren sind beispielsweise organische Peroxide und Hydroperoxide, weiterhin Peroxidsulfate, Percarbonate, Peroxidester, Wasserstoffperoxid und Azoverbindungen. Beispiele für solche Initiatoren sind Wasserstoffperoxid, Dicyclohexylperoxiddicarbonat, Diacetylperoxid, Di-tert.-Butylperoxid, Diamylperoxid, Dioctanoylperoxid, Didecanoylperoxid, Dilauroylperoxid, Dibenzoylperoxid, Bis(o-toluyl)peroxid, Succinylperoxid, Methylethylketonperoxid, Di-tert.-Butylhydroperoxid, Acetylacetonperoxid, Butylperacetat, tert.-Butylpermaleinat, tert.-Butylisobutyrat, tert.-Butylperpivalat, tert.-Butylperoctoat, tert.-Butylperneodecanoat, tert.-Butylperbenzoat, tert.-Butylhydroperoxid, Cumolhydroperoxid, tert.-Butylperneodecanoat, tert.-Amylperpivalat, tert.-Butylperpivalat, tert.-Butoxi-2-ethylhexanoat und Diisopropylperoxidicarbamat; weiterhin Lithium-, Natrium-, Kalium- und Ammoniumperoxodisulfat, Azoinitiatoren 2,2'-Azobis-isobutyronitril, 2,2'-Azobis(2-methylbutyronitril), 2,2'-Azobis[2-methyl-N-(-2-hydroxyethyl)propionamid, 1,1'-Azobis(1-cyclohexancarbomitril), 2,2'-Azobis(2,4-dimethylvaleronitril), 2,2'-Azobis(N,N'-dimethylenisobutyroamidin)dihydrochlorid, und 2,2'-Azobis(2-amidinopropan)dihydrochlorid, sowie im folgenden erläutete Redox-Initiatorsysteme.

Redox-Initiatorsysteme enthalten mindestens eine peroxidhaltige Verbindung in Kombination mit einem Redox-Coinitiator, zum Beispiel eine reduzierend wirkende Schwefelverbindung wie Bisulfite, Sulfite, Thiosulfate, Dithionite und Tetrathionate von Alkalimetallen oder von Ammoniumverbindungen. So kann man Kombinationen von Peroxodisulfaten mit Alkalimetall- oder Ammoniumhydrogensulfiten einsetzen, zum Beispiel Ammoniumperoxodisulfat und Ammoniumdisulfit. Die Menge der peroxidhaltigen Verbindungen zum Redox-Coinitiator beträgt im Allgemeinen 30 : 1 bis 0,05 : 1.

Die Initiatoren können allein oder in Mischung untereinander angewendet werden, zum Beispiel Mischungen aus Wasserstoffperoxid und Natriumperoxodisulfat.

Die Initiatoren können sowohl wasserlöslich als auch in Wasser nicht, oder nur gering löslich sein. Für die radikalische Polymerisation in wässrigem Medium werden bevorzugt wasserlösliche Initiatoren eingesetzt, das heißt Initiatoren, die in der zur Polymerisation üblicherweise eingesetzten Konzentration im wässrigen Polymerisationsmedium löslich sind.

Hierzu zählen Peroxodisulfate, Azoinitiatoren mit ionischen Gruppen, organische Hydroperoxide mit bis zu 6 C-Atomen, Acetonhydroperoxid, Methylethylketonhydroperoxid und Wasserstoffperoxid, sowie die vorstehend genannten Redoxinitiatoren.

In Kombination mit den Initiatoren beziehungsweise mit den Redox-Initiatorsystemen können zusätzlich Übergangsmetallkatalysatoren eingesetzt werden, zum Beispiel Salze von Eisen, Kobalt, Nickel, Kupfer, Vanadium und Mangan. Geeignete Salze sind zum Beispiel Eisensulfat, Kobalt(II)chlorid, Nickel(II)sulfat oder Kupfer(I)chlorid. Bezogen auf die Monomeren wird das reduzierend wirkende Übergangsmetallsalz in einer Konzentration von 0,1 ppm bis 1000 ppm eingesetzt. So kann man Kombinationen von Wasserstoffperoxid mit Eisen(II)Salzen einsetzen, beispielsweise 0,5 bis 30% Wasserstoffperoxid und 0,1 bis 500 ppm Mohrsches Salz.

Auch bei der radikalischen Copolymerisation in organischen Lösungsmitteln können in Kombination mit den oben genannten Initiatoren Redox-Coinitiatoren und/oder Übergangsmetallkatalysatoren mit verwendet werden, zum Beispiel Benzoin, Dimethylanilin, Ascorbinsäure sowie in organischen Lösungsmitteln lösliche Komplexe von Schwermetallen, wie Kupfer, Kobalt, Eisen, Mangan, Nickel und Chrom. Die üblicherweise verwendeten Mengen an Redox-Coinitiatoren beziehungsweise Übergangsmetallkatalysatoren betragen etwa 0,1 bis 1000 ppm, bezogen auf die eingesetzten Mengen an Monomeren.

Die radikalische Copolymerisation kann auch durch Einwirkung von ultravioletter Strahlung, gegebenenfalls in Gegenwart von UV-Initiatoren durchgeführt werden. Solche Initiatoren sind beispielsweise Verbindungen wie Benzoin und Benzoinether, α-Methylbenzoin oder α-Phenylbenzoin. Auch so genannte Triplett-Sensibilisatoren, wie Benzyldiketale, können verwendet werden. Als UV-Strahlungsquellen dienen beispielsweise neben energiereichen UV-Lampen wie Kohlebogenlampen, Quecksilberdampflampen oder Xenonlampen auch UV-arme Lichtquellen wie Leuchtstoffröhren mit hohem Blauanteil.

Um das mittlere Molekulargewicht der radikalischen Polymerisation in Verfahrensschritt (i) zu kontrollieren, ist es oft zweckmäßig, die radikalische Copolymerisation in Gegenwart von Reglern durchzuführen. Hierzu können Regler verwendet werden, insbesondere organische SH-Gruppen enthaltende Verbindungen, insbesondere wasserlösliche SH-Gruppen enthaltende Verbindungen wie 2-Mercaptoethanol, 2-Mercaptopropanol, 3-Mercaptopropionsäure, Cystein, N-Acetylcystein, weiterhin Phosphor(III)- oder Phosphor(I) Verbindungen wie Alkalimetall- oder Erdalkalimetallhypophosphite, zum Beispiel Natriumhypophosphit, sowie Hydrogensulfite wie Natriumhydrogensulfit. Die Polymerisationsregler werden im Allgemeinen in Mengen von 0,05 bis 10 Gew.-%, insbesondere 0,1 bis 2 Gew.-%, bezogen auf die Monomere eingesetzt. Bevorzugte Regler sind die vorgenannten SH-Gruppen tragenden Verbindungen, insbesondere wasserlösliche SH-Gruppen tragende Verbindungen wie 2-Mercaptoethanol, 2-Mercaptopropanol, 3-Mercaptopropionsäure, Cystein und N-Acetylcystein. Bei diesen Verbindungen hat es sich bewährt, diese in einer Menge von 0,05 bis 2 Gew.-%, insbesondere 0,1 bis 1 Gew.-% bezogen auf die Monomere einzusetzen. Die vorgenannten Phosphor(III)- und Phosphor(I)-Verbindungen, sowie die Hydrogensulfite, werden üblicherweise in größeren Mengen zum Beispiel 0,5 bis 10 Gew.-% und insbesondere 1 bis 8 Gew.-%, bezogen auf die zu polymerisierenden Monomere, eingesetzt. Auch durch die Wahl des geeigneten Lösungsmittels kann auf das mittlere Molekulargewicht Einfluss genommen werden. So führt die Polymerisation in Gegenwart von Verdünnungsmitteln mit benzylischen oder allylischen H-Atomen durch Kettenübertragung zu einer Verringerung des mittleren Molekulargewichtes.

Die radikalische Copolymerisation in Schritt (i) kann nach den üblichen Polymerisationsverfahren erfolgen, einschließlich Lösungs-, Fällungs-, Suspensions- oder SubstanzPolymerisation. Bevorzugt ist die Methode der Lösungs-Polymerisation, d.h. die Polymerisation in Lösungs- oder Verdünnungsmitteln.

Zu den geeigneten Lösungs- oder Verdünnungsmitteln zählen sowohl aprotische Lösungsmittel, zum Beispiel Aromaten wie Toluol, o-Xylol, p-Xylol, Cumol, Chlorbenzol, Ethylbenzol, technische Mischungen von Alkylaromaten, Aliphaten und Cycloaliphaten wie Cyclohexan und technische Aliphatenmischungen, Ketone wie Aceton, Cyclohexanon und Methylethylketon, Ether wie Tetrahydrofuran, Dioxan, Diethylether, tert.-Butylmethylether, und C₁-C₄-Alkylester aliphatischer C₁-C₄-Carbonsäuren wie Essigsäuremethylester und Essigsäureethylester, weiterhin protische Lösungsmittel wie Glykole und Glykolderivate, Polyalkylenglykole und deren Derivate, C₁-C₄-Alkanole, z.B. n-Propanol, n-Butanol, Isopropanol, Ethanol oder Methanol, sowie Wasser und Mischungen von Wasser mit C₁-C₄-Alkanolen, zum Beispiel Isopropanol-Wasser-Mischungen. Vorzugsweise erfolgt das erfindungsgemäße radikalische Copolymerisationsverfahren in Wasser oder einer Mischung aus Wasser mit bis zu 60 Gew.-% an C₁-C₄-Alkanolen oder Glykolen als Lösungs- oder Verdünnungsmittel. Besonders bevorzugt wird Wasser als alleiniges Lösungsmittel eingesetzt.

Ferner kann das Copolymerisationsverfahren in Anwesenheit von Tensiden durchgeführt werden. Als Tenside können anionische, kationische, nichtionische oder ambivalente Tenside oder deren Mischungen verwendet werden. Es können sowohl niedermolekulare als auch polymere Tenside eingesetzt werden. Nichtionische Tenside sind beispielsweise Additionsprodukte von Alkylenoxiden, insbesondere Ethylenoxid, Propylenoxid und/oder Butylenoxid an Alkohole, Amine, Phenole, Naphthole oder Carbonsäuren. Vorteilhaft setzt man als Tenside Additionsproduke von Ethylenoxid und/oder Propylenoxid an mindestens 10 Kohlenstoffatome enthaltende Alkohole ein, wobei die Additionsprodukte pro Mol Alkohol 3 bis 200 Mol Ethylenoxid und/oder Propylenoxid angelagert enthalten können. Die Additionsprodukte enthalten die Alkylenoxid-Einheiten in Form von Blöcken oder in statistischer Verteilung.

Auch kationische Tenside sind geeignet. Beispiele hierfür sind die mit Dimethylsulfat quarternierten Umsetzungsprodukte von 6,5 Mol Ethylenoxid mit 1 Mol Oleylamin, Distearyldimethylammoniumchlorid, Laurylmethylammoniumchlorid oder Cetylpyridiniumbromid und mit Dimethylsulfat quarternierte Stearinsäuretriethanolaminester.

Die Tenside sind in der Copolymerisationszusammensetzung vorzugsweise in Mengen in einem Bereich von 0,01 bis 15 Gew.-%, besonders bevorzugt in einem Bereich von 0,1 bis 5 Gew.-%, jeweils bezogen auf das Gewicht der Zusammensetzung, enthalten.

Als weitere Hilfsstoffe können in dem Verfahrensschritt (i) Stabilisatoren, Verdicker, Füllstoffe oder Zellkeimbildner oder Mischungen dieser eingesetzt werden.

Die Hilfsstoffe sind in der in Verfahrensschritt (i) eingesetzten Zusammensetzung vorzugsweise in einer Menge in einem Bereich von 0,01 bis 15 Gew.-%, insbesondere bevorzugt in einer Menge in einem Bereich von 0,1 bis 5 Gew.-%, jeweils bezogen auf das Gesamtgewicht der Zusammensetzung, enthalten.

Das radikalische Copolymerisationsverfahren wird bevorzugt unter weitgehendem oder vollständigem Ausschluss von Sauerstoff, vorzugsweise in einem Inertgasstrom, zum Beispiel einem Stickstoffstrom, durchgeführt.

Das erfindungsgemäße Verfahren kann in den für Polymerisationsmethoden üblichen Apparaturen durchgeführt werden. Hierzu zählen Rührkessel, Rührkesselkaskaden, Autoklaven, Rohrreaktoren und Kneter. Die radikalische Copolymerisation wird beispielsweise in Rührkesseln durchgeführt, die mit einem Anker-, Blatt-, Impeller- oder Mehrstufenimpulsgegenstromrührer ausgestattet sind. Besonders geeignet sind Apparaturen, die im Anschluss an die Polymerisation die direkte Isolierung des Festprodukts gestatten, wie z. B. Schaufeltrockner. Die erhaltenen Polymerisat-Suspensionen können direkt in Verdampfern, beispielsweise Bandtrocknern, Schaufeltrocknern, Sprühtrocknern oder Wirbelbetttrocknern, getrocknet werden. Man kann aber auch durch Filtrieren oder Zentrifugieren die Hauptmenge des inerten Lösungsmittels abtrennen und gegebenenfalls durch Nachwaschen mit frischem Lösungsmittel Reste von Initiatoren, Monomeren und Schutzkolloiden - sofern vorhanden - entfernen und die Copolymere erst danach trocknen.

Die radikalische Copolymerisation erfolgt üblicherweise bei Temperaturen im Bereich von 0°C bis 300°C, vorzugsweise im Bereich von 40 bis 120°C. Die Polymerisationsdauer liegt üblicherweise im Bereich von 0,5 Stunden bis 15 Stunden und insbesondere im Bereich von 2 bis 6 Stunden. Der bei der radikalischen Copolymerisation herrschende Druck ist für den Erfolg der Polymerisation von untergeordneter Bedeutung und liegt in der Regel im Bereich von 800 mbar bis 2 bar und häufig bei Umgebungsdruck. Bei Einsatz leichtflüchtiger Lösungsmittel oder leichtflüchtiger Monomere kann der Druck auch höher sein.

Die in Verfahrensschritt (i) erhaltenen Copolymere werden in Verfahrensschritt (ii) mit einem oder mehreren Vernetzer(n) umgesetzt. Die Umsetzung erfolgt gegebenenfalls in Gegenwart eines Lösungs- bzw. Verdünnungsmittels. Zu den geeigneten Lösungs- oder Verdünnungsmitteln zählen sowohl aprotische Lösungsmittel, zum Beispiel Aromaten wie Toluol, o-Xylol, p-Xylol, Cumol, Chlorbenzol, Ethylbenzol, technische Mischungen von Alkylaromaten, Aliphaten und Cycloaliphaten wie Cyclohexan und technischen Aliphatenmischungen, Ketone wie Aceton, Cyclohexanon und Methylethylketon, Ether wie Tetrahydrofuran, Dioxan, Diethylether, tert.-Butylmethylether, und C₁-C₄-Alkylester aliphatischer C₁-C₄-Carbonsäuren wie Essigsäuremethylester und Essigsäureethylester, weiterhin protische Lösungsmittel wie Glykole und Glykolderivate, Polyalkylenglykole und deren Derivate, C₁-C₄-Alkanole, z.B. n-Propanol, n-Butanol, Isopropanol, Ethanol oder Methanol, sowie Wasser und Mischungen von Wasser mit C₁-C₄-Alkanolen, zum Beispiel Isopropanol-Wasser-Mischungen. Vorzugsweise erfolgt die Umsetzung in Verfahrensschritt (ii) in Wasser oder einer Mischung aus Wasser mit bis zu 60 Gew.-% an C₁-C₄-Alkanolen oder Glykolen als Lösungs- oder Verdünnungsmittel. Besonders bevorzugt wird Wasser als alleiniges Lösungsmittel eingesetzt.

Die Umsetzung in Verfahrensschritt (ii) erfolgt üblicherweise bei Temperaturen im Bereich von 0°C bis 100°C, vorzugsweise im Bereich von 20 bis 80°C. Die Umsetzungsdauer liegt üblicherweise im Bereich von 0,5 Stunden bis 15 Stunden und insbesondere im Bereich von 1 bis 2 Stunden. Der bei der Umsetzung herrschende Druck ist für den Erfolg der Umsetzung von untergeordneter Bedeutung und liegt in der Regel im Bereich von 800 mbar bis 2 bar und häufig bei Umgebungsdruck.

Der Verfahrensschritt (ii) kann wie auch Verfahrensschritt (i) in den vorstehend beschriebenen für Polymerisationsmethoden üblichen Apparaturen durchgeführt werden. Hierbei wird auf die Ausführungen zur radikalischen Copolymerisation verwiesen.

Ein weiterer Gegenstand der vorliegenden Erfindung ist die Herstellung von Schäumen aus den erfindungsgemäßen schäumbaren Copolymeren.

Hierzu können die erfindungsgemäßen, in Verfahrensschritt (ii) erhaltenen schäumbaren Copolymere auf unterschiedliche Art und Weise weiterverarbeitet werden. So können diese gemäß einer Ausführungsform der Erfindung direkt, ohne vorherige Aufreinigung als Polymerisat geschäumt werden, um daraus einen Schaum zu erhalten. Gemäß einer weiteren Ausführungsform werden diese sprüh- oder gefriergetrocknet, falls notwendig gemahlen und anschließend geschäumt. Alternativ können die erfindungsgemäßen schäumbaren Copolymere ebenfalls als Polymerisat auf einen Träger zu einem Film gegossen werden und nach mehrtägiger Trocknung bei Temperaturen von etwa 40°C in einer geeigneten Mühle zu einem Pulver vermahlen werden, welches anschließend zu einem Schaum weiterverarbeitet wird.

Gemäß einer allgemeinen Ausführungsform der Erfindung werden die erfindungsgemäßen Copolymere bei einer Temperatur im Bereich von 50 bis 300 °C, bevorzugt bei einer Temperatur im Bereich von 100 bis 250 °C, besonders bevorzugt bei einer Temperatur im Bereich von 140 bis 230 °C geschäumt. Die Zeitdauer des Schäumvorganges variiert in Abhängigkeit der Temperatur. Die Haltezeit der Temperatur liegt üblicherweise im Bereich von 65 Minuten. Gemäß einer weiteren Ausführungsform der Erfindung ist es möglich, die schäumbaren Copolymere unter Einwirkung von Mikrowellenstrahlung zu schäumen. Bei der Verwendung von Mikrowellenstrahlung werden die erfindungsgemäßen Copolymere allgemein unter einem Energieeintrag von 360 bis 800 W über einen Zeitraum von 6 bis 20 Minuten bei Raumtemperatur geschäumt.

Gemäß einer weiteren Ausführungsform der Erfindung werden die erfindungsgemäßen schäumbaren Copolymere vor dem Schäumen mit einer weiteren Komponente geblendet. Als weitere Komponente kommen hierbei beispielsweise Polystyrol, Stärke, Polyester, Polyole, Polyamide, Polyacrylate, sowie Mischungen (Blends) dieser in Betracht. Bevorzugt ist die weitere Komponente Polystyrol. Vorteilhafterweise lassen sich durch Zugabe der vorstehend genannten weiteren Komponente(n) je nach Auswahl der jeweiligen Komponente(n) die Hydrophilie, Struktur und die mechanischen Eigenschaften der erfindungsgemäßen schäumbaren Copolymere, je nach Anforderung an den resultierenden Schaum, einstellen.

Die weiteren Komponenten werden dabei mit den erfindungsgemäßen schäumbaren Copolymeren gemischt und sind vorzugsweise in Mengen in einem Bereich von 1 bis 99 Gew.-%, besonders bevorzugt in Mengen in einem Bereich von 10 bis 70 Gew.-%, jeweils bezogen auf das Gewicht der Zusammensetzung, enthalten.

Die durch Schäumung der erfindungsgemäßen schäumbaren Copolymere erhaltenen Schäume weisen eine Dichte im Bereich von 40 bis 300 g/l, bevorzugt im Bereich von 50 bis 200 g/l aus. Die mittlere Schaumzellengröße liegt im Bereich von 50 bis 500 µm, bevorzugt im Bereich von 100 bis 200 µm.

Die folgenden Beispiele und Figuren sollen die Erfindung verdeutlichen.

Es zeigt:
- Figur 1:: die Rasterelektronenmikroskopaufnahme eines Schaums aus einem Itaconsäure/Acrylsäure-Copolymer (1 : 3 [Gew.-%]), das in Gegenwart von 1 Gew.-% Talkum mit 30 Gew.-% TEA vernetzt wurde.
- Figur 2:: die rasterelektronenmikrospische Aufnahme eines Schaums aus einem Itaconsäure/Acrylsäure-Copolymer (1 : 3 [Gew.-%]), das in Gegenwart von 1 Gew.-% Talkum mit 30 Gew.-% THEED vernetzt wurde.
- Figur 3:: die rasterelektronenmikroskopische Aufnahme eines Schaums aus einem Itaconsäure/Acrylsäure-Copolymer (1 : 3 [Gew.-%]), das in Gegenwart von 1 Gew.-% Talkum mit 30 Gew.-% TRIPA vernetzt wurde.
- Figur 4:: die Aufnahme eines Schaums aus einem Itaconsäure/Acrylsäure-Copolymer (1 : 3 [Gew.-%]), das in Gegenwart von 1 Gew.-% Talkum mit 30 Gew.-% TRIPA vernetzt wurde.
- Figur 5: die rasterelektronenmikroskopische Aufnahme eines Schaums, der aus 90 Gew.-% eines schäumbaren Copolymers aus einem Itaconsäure/AcrylsäureCopolymer (1 : 3 [Gew.-%]), das in Gegenwart von 1 Gew.-% Talkum mit 30 Gew.-% TRIPA vernetzt wurde und 10 Gew.-% Polystyrol besteht.
- Figur 6: die Aufnahme eines Schaums, der aus 90 Gew.-% eines schäumbaren Copolymers aus einem Itaconsäure/Acrylsäure-Copolymer (1 : 3 [Gew.-%]), das in Gegenwart von 1 Gew.-% Talkum mit 30 Gew.-% TRIPA vernetzt wurde und 30 Gew.-% Polystyrol besteht.
- Figur 7:: die rasterelektronenmikroskopische Aufnahme eines Schaums, der aus 90 Gew.-%) eines schäumbaren Copolymers aus einem Itaconsäure/AcrylsäureCopolymer (1 : 3 [Gew.-%]), das in Gegenwart von 1 Gew.-% Talkum mit 30 Gew.-% TRIPA vernetzt wurde und 50 Gew.-% Polystyrol besteht.

### A Analytik:

### a) Bestimmung des K-Wertes:

Die K-Werte der wässrigen Lösungen der Copolymere wurden nach H. Fikenscher, Cellulose-Chemie, Band 13, 48 bis 64 und 71 bis 74 (1932) in wässriger Lösung bei einem pH-Wert von 7, einer Temperatur von 25°C und einer Polymerkonzentration des Copolymers von 1 Gew.-% in deionisiertem Wasser bestimmt.

### B Herstellung der Copolymere durch radikalische Copolymerisation einer oder mehrerer monoethylenisch ungesättigter monomeren Verbindungen mit Itaconsäure

### Beispiel 1 Copolymer aus Acrylsäure/Itaconsäure

In einem Rührtopf mit Blattrührer werden 70 g Itaconsäure in 575 g deionisiertem Wasser gelöst und bei einer Temperatur von 98°C zum leichten Rückfluss erhitzt. Anschließend werden über einen Zeitraum von 5 Stunden Zulauf 1, bestehend aus 210 g Acrylsäure in 380 g deionisiertem Wasser und innerhalb von 6 Stunden Zulauf 2, bestehend aus 4,2 g Natriumperoxodisutfat (NaPS) in 124 g deionisiertem Wasser der Vorlage hinzugegeben. Nach Beendigung der Zugabe über Zulauf 1 wird für weitere 2 Stunden bei 98 °C gerührt. Man erhält eine hellgelbe, klare Polymerlösung mit einem Feststoffgehalt von 25,7 g und einem K-Wert (1%ig in entionisiertem Wasser) von 35,4.

### Beispiel 2 Copolymere aus Acrylsäure/Itaconsäure - Acrylsäurezudosierung über eine Rampe

Die Synthesen wurden in einer A 100-3 ChemSpeed Anlage in jeweils 100 ml-Reaktoren durchgeführt.

Die Parameter für die Synthesen sind den Tabellen 1 und 2 dargestellt. Die Reaktionszeiten betrugen zwischen 6 und 8 Stunden. Die Initiatorkonzentration lag im Bereich von 150 % und 200 %, verglichen mit dem vorstehenden Beispiel 1. Der Initiator wurde über einen Zeitraum von 30 Minuten der vorgelegten Itaconsäure hinzugegeben, anschließend erfolgt die Zudosierung der Acrylsäure über eine Rampe. Die Parameter der Rampen sind in Tabelle 2 dargestellt.

Man erhält eine hellgelbe, klare Polymerlösung mit einem gewichtsmittleren Molekulargewicht von 38.000 bis 175.000 Da.

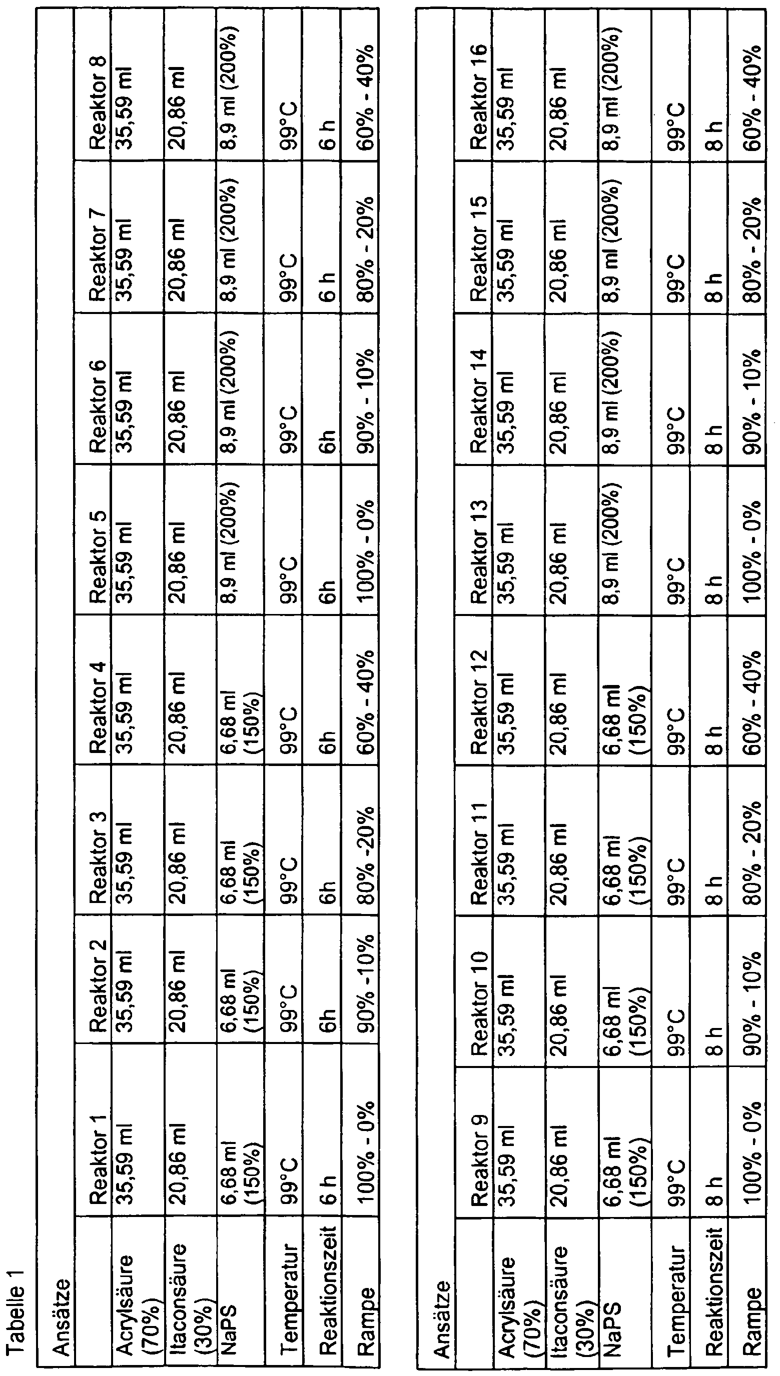

**Tabelle 2**

| Acrylsäurezugabe über Rampe 35,59 ml | | | | | | | | | | | |
|---|---|---|---|---|---|---|---|---|---|---|---|
| Boden | | 1 | 2 | 3 | 4 | 5 | | 6 | 7 | 8 | Summe |
| Reaktor 1 | | 8,898 | 7,626 | 6,355 | 5,084 | 3,813 | | 2,542 | 1,271 | 0,000 | 35,590 |
| Reaktor 2 | | 8,008 | 6,991 | 5,974 | 4,957 | 3,940 | | 2,923 | 1,907 | 0,890 | 35,590 |
| Reaktor 3 | | 7,118 | 6,355 | 5,593 | 4,830 | 4,067 | | 3,305 | 2,542 | 1,780 | 35,590 |
| Reaktor 4 | | 5,339 | 5,084 | 4,830 | 4,576 | 4,322 | | 4,067 | 3,813 | 3,559 | 35,590 |
| Reaktor 5 | | 8,898 | 7,626 | 6,355 | 5,084 | 3,813 | | 2,542 | 1,271 | 0,000 | 35,590 |
| Reaktor 6 | | 8,008 | 6,991 | 5,974 | 4,957 | 3,940 | | 2,923 | 1,907 | 0,890 | 35,590 |
| Reaktor 7 | | 7,118 | 6,355 | 5,593 | 4,830 | 4,067 | | 3,305 | 2,542 | 1,780 | 35,590 |
| Reaktor 8 | | 5,339 | 5,084 | 4,830 | 4,576 | 4,322 | | 4,067 | 3,813 | 3,559 | 35,590 |
| | | | | | | | | | | | |
| Boden | 1 | 2 | 3 | 4 | 5 | 6 | 7 | 8 | 9 | 10 | Summe |
| Reaktor 9 | 7,118 | 6,327 | 5,536 | 4,745 | 3,954 | 3,164 | 2,373 | 1,582 | 0,791 | 0,000 | 35,590 |
| Reaktor 10 | 6,406 | 5,773 | 5,141 | 4,508 | 3,875 | 3,243 | 2,610 | 1,977 | 1,345 | 0,712 | 35,590 |
| Reaktor 11 | 5,694 | 5,220 | 4,745 | 4,271 | 3,796 | 3,322 | 2,847 | 2,372 | 1,898 | 1,424 | 35,590 |
| Reaktor 12 | 4,271 | 4,113 | 3,954 | 3,796 | 3,638 | 3,480 | 3,322 | 3,164 | 3,005 | 2,847 | 35,590 |
| Reaktor 13 | 7,118 | 6,327 | 5,536 | 4,745 | 3,954 | 3,164 | 2,373 | 1,582 | 0,791 | 0,000 | 35,590 |
| Reaktor 14 | 6,406 | 5,773 | 5,141 | 4,508 | 3,875 | 3,243 | 2,610 | 1,977 | 1,345 | 0,712 | 35,590 |
| Reaktor 15 | 5,694 | 5,220 | 4,745 | 4,271 | 3,796 | 3,322 | 2,847 | 2,372 | 1,898 | 1,424 | 35,590 |
| Reaktor 16 | 4,271 | 4,113 | 3,954 | 3,796 | 3,638 | 3,480 | 3,322 | 3,164 | 3,005 | 2,847 | 35,590 |

### C1 Herstellung der erfindungsgemäßen schäumbaren Copolymere sowie der Schäume

### Beispiel 1

Zu einem Copolymer aus Itaconsäure (Molekulargewicht > 200000) wird ein Vernetzer hinzugegeben. Die Mischung wird mit VE-Wasser und 1 Gew.-% Nukleierungsmittel versetzt und gerührt. Die Gesamtlösung wird mit einem Magnetrührer über einen Zeitraum von 1 Stunde kräftig gemischt. Durch Gefrier- oder Sprühtrocknung wird ein farbloses Pulver erhalten. Das Pulver wird in eine Form eingewogen und bei 140 °C für mindestens 30 Minuten geschäumt. Als Copolymere werden die in Tabelle 3 angegebenen Copolymere eingesetzt.

**Tabelle 3**

| Copolymer | Verhältnis (Gew.-%) |
|---|---|
| IS/AS | 1:1.1 |
| | 1:1.67 |
| | 1:2.7 |
| | 1:3 |
| | 1:08 |
| IS/Styrol | 1:1.20 |
| IS/AS/Styrol | 51/28/21 |

| | |
|---|---|
| IS = Itaconsäure; AS = Acrylsäure | |

Als Vernetzer wurden die in Tabelle 4 angegebenen Copolymere eingesetzt:

**Tabelle 4**

| Vernetzer | Anteil (Gew.-%) |
|---|---|
| Triethanolamin | 30 |
| | 40 |
| | 50 |
| | 60 |
| N,N,N,N-tetrakis(2-hydroxyethynol)ethylendiamin | 30 |
| | 51 |
| N,N,N -tetrakis(2-hydroxyethyl)adipamide | 30 |
| Helizarin | 30 |
| Triisopropanolamin | 30 |
| | 44.4 |

Als Nukleierungsmittel wurden Talkum (Magnesiumsilikat), Magnesiumcarbonat, Calciumcarbonat, Huntite/Hydromagnesit, KMgAl-Silikate in einem Anteil von 1 Gew.-% bezogen auf die Gesamtmasse des Polymers verwendet.

Die Schäume zeigten eine geschlossenzellige Struktur mit einer Dichte im Bereich von 50 bis 200 g/l.

### C2

Zu einem Copolymer aus Itaconsäure (Molekulargewicht > 200000) wird ein Vernetzer gegeben. Die Mischung wird mit deionisiertem Wasser und 1 Gew.-% Nukleierungsmittel versetzt und gerührt. Die Gesamtlösung wird mit einem Magnetrührer über einen Zeitraum von 1 Stunde kräftig gemischt. Durch Gefrier- oder Sprühtrocknung wird ein farbloses Pulver erhalten. Das Pulver wird mit 10 Gew.-%, 30 Gew.-% bzw. 50 Gew.-% Polystyrol oder Stärke geblendet, in eine Form eingewogen und bei 140 °C über einen Zeitraum von mindestens 30 Minuten geschäumt.

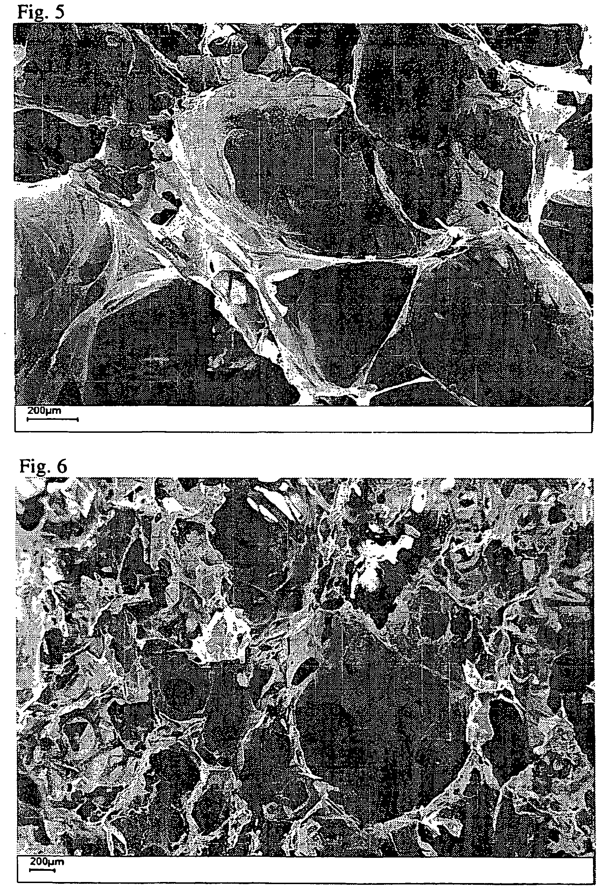

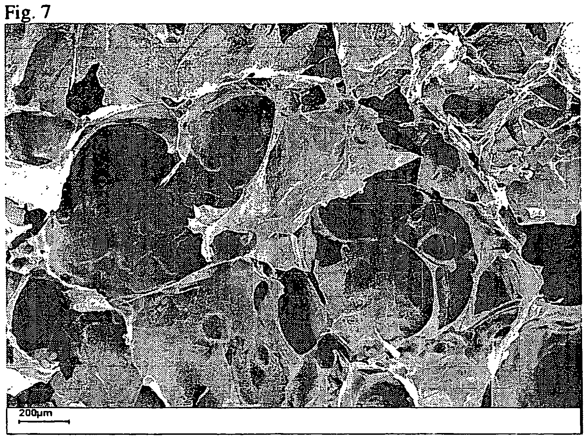

Die Figuren 5 bis 7 zeigen elektronenmikroskopische Aufnahmen von Schäumen, die aus Blends der erfindungsgemäßen schäumbaren Copolymere und Styrol hergestellt wurden. Bei der Herstellung der Schäume wurden erfindungsgemäße schäumbare Copolymere mit 10 Gew.-% (Figur 5), 30 Gew.-% (Figur 6) und 50 Gew.-% (Figur 7) mit Polystyrol geblendet und anschließend geschäumt. Die Schäume zeigen eine geöffnet-zellige Struktur mit einer Dichte von 122 g/l, 280 g/l bzw. 270 g/l.

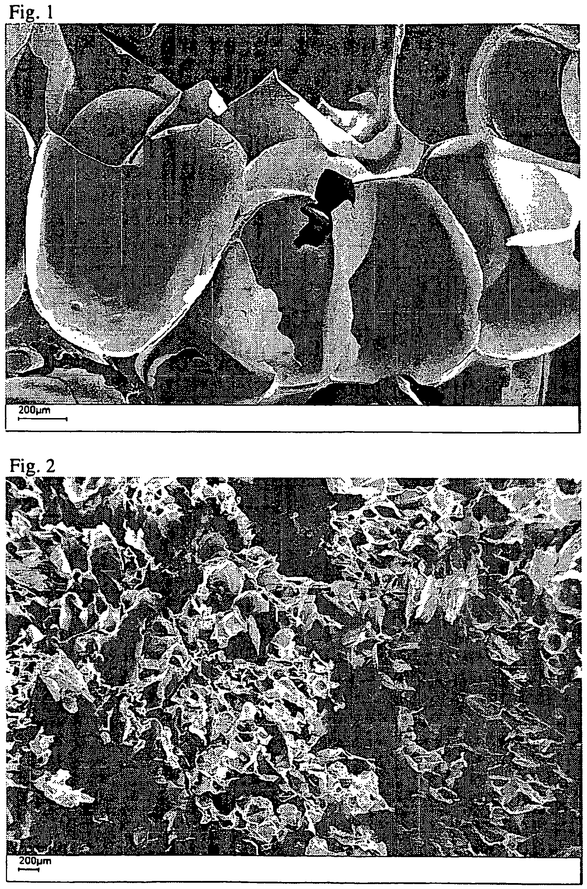

Aufnahmen einiger der in den Beispielen erhaltenen Schäume sind in den Figuren 1 bis 7 gezeigt.

Der in Figur 1 dargestellte Schaum (Itaconsäure/Acrylsäure (1 : 3 [Gew.-%]), TEA (30 Gew.-%), Talkum (1 Gew.-%)) zeigt eine geschlossen-zellige Struktur mit einer Dichte von 109 g/l. Die Größe der Zellen schwankt zwischen 50 und 400 µm.

Der in Figur 2 dargestellte Schaum (Itaconsäure/Acrylsäure (1 : 3 [Gew.-%]), THEED (30 Gew.-%), Talkum (1 Gew.-%)) zeigt eine geschlossen-zellige Struktur mit einer Dichte von 130 g/l. Die Größe der Zellen schwankt zwischen 100 und 400 µm.

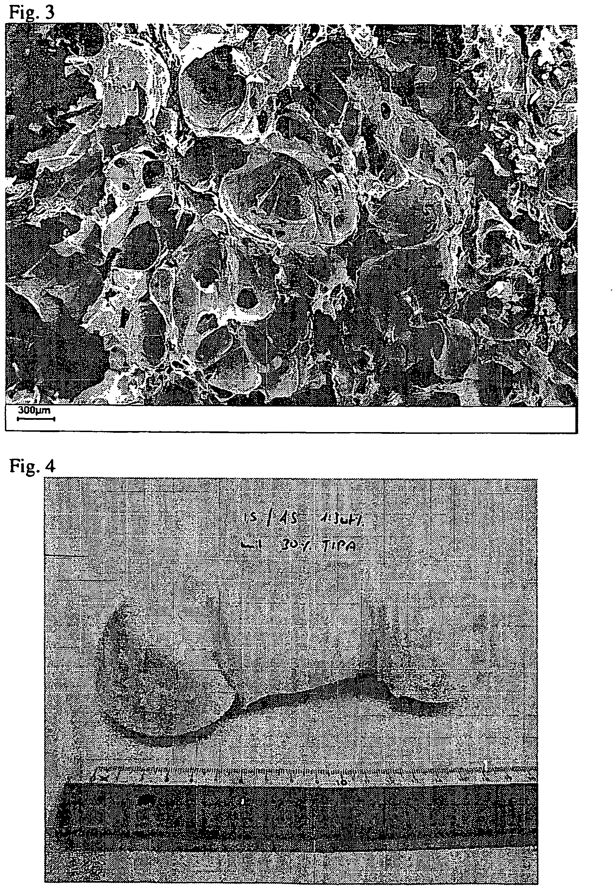

Der in Figur 3 dargestellte Schaum (Itaconsäure/Acrylsäure (1 : 3 [Gew.-%]), TRIPA (30 Gew.-%), Talkum (1 Gew.-%)) zeigt eine geöffnet-zellige Struktur mit einer Dichte zwischen 100 und 200 g/l.

Figur 4 zeigt eine Lichtbildaufnahme des in Figur 3 gezeigten Schaumes.

## Patentansprüche

1. Verfahren zur Herstellung von schäumbaren Copolymeren, enthaltend die Schritte:
(i) Herstellung zumindest eines Reaktionsgemisches (a) durch radikalische Copolymerisation einer oder mehrerer monoethylenisch ungesättigter monomeren Verbindung(en) (Monomer(e) A1) mit einer oder mehreren Verbindung(en) ausgewählt aus der Gruppe Itaconsäure, Mesaconsäure, Fumarsäure, Maleinsäure, Aconitsäure, Glutaconsäure sowie deren Salzen, Estern und Anhydriden (Monomer(e) A2), und
(ii) Umsetzung von zumindest einem der in Schritt (i) erhaltenen Copolymere mit einem zahlenmittleren Molekulargewicht von 15.000 bis 5.000.000 g/mol mit einem oder mehreren Vernetzer(n) (b), welcher mindestens zwei funktionelle Gruppen aufweist, die mit freien funktionellen Gruppen der in dem Reaktionsgemisch (a) enthaltenen Copolymere in einer Kondensations- oder in einer Additionsreaktion reagieren können, und wobei das Gewichtsverhältnis von Reaktionsgemisch (a) zu Vernetzer (b) 1:10 bis 100:1 beträgt.

2. Verfahren nach Anspruch 1, wobei die monoethylenisch ungesättigte(n) Verbindung(en) (Monomer(e) A1) ausgewählt ist oder sind aus der Gruppe Styrol, α-Methylstyrol, o-Chlorstyrol, Vinylchlorid, Vinylidenchlorid, Vinylacetat, Methyl(meth)acrylat, Vinylpropionat, Vinyl-n-butyrat, Vinyllaurat, Vinylstearat, Itaconsäure, Acrylnitril, Methacrylnitril, Fumarsäuredinitril, Maleinsäuredinitril, 1,3-Butadien (Butadien), Isopren, Acrylamid, Methacrylamid, Vinylsulfonsäure, Acrylsäure, Methacrylsäure, Maleinsäure, Ethacrylsäure, α-Chloracrylsäure, α-Cyanoacrylsäure, β-Methylacrylsäure (Crotonsäure), α-Phenylacrylsäure, β-Acrytoxypropionsäure, Sorbinsäure, α-Chlorsorbinsäure, 2'-Methylisocrotonsäure, Zimtsäure, p-Chlorzimtsäure, β-Stearylsäure, Citraconsäure, Aconitsäure, Fumarsäure, Tricarboxyethylen- und Maleinsäureanhydrid.

3. Verfahren nach einem der Ansprüche 1 oder 2, wobei der eine oder die mehreren Vernetzer (b) ausgewählt ist oder sind aus der Gruppe Polyole, beispielsweise Ethylenglykol, Polyethylenglykol wie Diethylenglykol, Triethylenglykol und Tetraethylenglykol, Propylenglykol, Polypropylenglykol wie Dipropylenglykol, Tripropylenglykol oder Tetrapropylenglykol, 1,3-Butandiol, 1,4-Butandiol, 1,5-Pentandiol, 2,4-Pentandiol, 1,6-Hexandiol, 2,5-Hexandiol, Glycerin, Polyglycerin, Trimethylolpropan, Polyoxypropylen, Oxyethylenoxypropylen-Blockcopolymere, Sorbitanfettsäureester, Polyoxyethylensorbitanfettsäureester, Pentaerythrit, Polyvinylalkohol und Sorbitol, Aminoalkohole, beispielsweise Ethanolamin, Diethanolamin, Triethanolamin oder Propanolamin, Polyaminverbindungen, beispielsweise Ethylendiamin, Diethylentetraamin, Triethylentetraamin, Tetraethylenpentamin oder Pentaethylenhexaamin, N,N,N,N-tetrakis(2-Hydroxyethyl)ethylendiamin (THEED), N,N,N,N-tetrakis(2-Hydroxyethyl)adipamid (THEAA), Triisopropanolamin (TRIPA), Polyglycidether-Verbindungen wie Ethylenglykoldiglycidylether, Polyethylenglykoldiglycidylether, Glycerinpolyglycidylether, Pentaerithrylpolyglycidylether, Propylenglykoldiglycidylether, Polypropylenglykoldiglycidylether. Neopentylglykoldiglycidylether, Hexandiolglycidylether. Trimethylolpropanolglycidylether, Sorbitolpolyglycidylether, Phthalsäurediglycidylether, Adipinsäurediglycidylether, Glycidol, Polyisocyanate, vorzugsweise Diisocyanate wie 2,4-Toluoldiisocyanat und Hexamethylendiisocyanat, Polyazyridinverbindungen wie 2.2-bis-Hydroxymethylbutanol-tris[3-(1-aziridinyl)propionat], 1,6-Hexamethylendiethylenhamstoff und Diphenylmethan-bis-4,4'- 1 N,N'-diethylenhamstoff, Halogenperoxide wie Epichlor- und Epibromhydrin und α-Methylepichlorhydrin, Alkylencarbonate wie 1,3-Dioxolan-2-on(ethylencarbonat), 4-Methyl-1-3-dioxolan-2-on(propylencarbonat), polyquartäre Amine wie Kondensationsprodukte von Dimethylaminen und Epichlorhydrin, Di-, Tri- und Polyamine sowie Polyolverbindungen mit wenigstens zwei Hydroxylgruppen.

4. Verfahren nach einem der Ansprüche 1 bis 3, wobei in Verfahrensschritt (i) die Monomeren A1 in einer Menge von 50 bis 99 Gew.-% und die Monomeren A2 in einer Menge von 1 bis 50 Gew.-% eingesetzt werden.

5. Verfahren nach einem der Ansprüche 1 bis 4, wobei bei der Umsetzung des Reaktionsgemisches (a) mit dem einen oder den mehreren Vernetzern (b) ein Nukleierungsmittel eingesetzt wird.

6. Verfahren nach Anspruch 5, wobei als Nukleierungsmittel Talkum eingesetzt wird.

7. Verfahren nach einem der Ansprüche 1 bis 6, wobei die schäumbaren Copolymere in einem weiteren Verfahrensschritt geschäumt werden.

8. Verfahren nach Anspruch 7, wobei die schäumbaren Copolymere bei einer Temperatur von 50 bis 300°C geschäumt werden.

9. Verfahren nach Anspruch 7, wobei die schäumbaren Copolymere unter Einwirkung von Mikrowellenstrahlung geschäumt werden.

10. Schäumbare Copolymere herstellbar nach dem Verfahren gemäß einem der Ansprüche 1 bis 6.

11. Polymerschaum mit einer Dichte von 40 bis 200 g/l, herstellbar nach einem der Ansprüche 7 bis 9.

## Claims

1. A process for the production of foamable copolymers, comprising the steps of:
(i) preparation of at least one reaction mixture (a) via free-radical copolymerization of one or more monoethylenically unsaturated monomeric compound(s) (monomer(s) A1) with one or more compound(s) selected from the group of itaconic acid, mesaconic acid, fumaric acid, maleic acid, aconitic acid, glutaconic acid and their salts, esters and anhydrides (monomer(s) A2), and
(ii)reaction of at least one of the copolymers obtained in step (i) whose number-average molar mass is from 15 000 to 5 000 000 g/mol with one or more crosslinking agent(s) (b) having at least two functional groups which can react with free functional groups of the copolymers comprised in the reaction mixture (a), in a condensation reaction or in an addition reaction, where the ratio by weight of reaction mixture (a) to crosslinking agent (b) is from 1:10 to 100:1.

2. The process according to claim 1, where the monoethylenically unsaturated compound(s) (monomer(s) A1) has/have been selected from the group of styrene, α-methylstyrene, o-chlorostyrene, vinyl chloride, vinylidene chloride, vinyl acetate, methyl (meth)acrylate, vinyl propionate, vinyl n-butyrate, vinyl laurate, vinyl stearate, itaconic acid, acrylonitrile, methacrylonitrile, fumaronitrile, maleonitrile, 1,3-butadiene (butadiene), isoprene, acrylamide, methacrylamide, vinylsulfonic acid, acrylic acid, methacrylic acid, maleic acid, ethacrylic acid, α-chloroacrylic acid, α-cyanoacrylic acid, β-methylacrylic acid (crotonic acid), α-phenylacrylic acid, β-acryloyloxypropicnic acid, sorbic acid, α-chlorosorbic acid, 2'-methylisocrotonic acid, cinnamic acid, p-chlorocinnamic acid, β-stearylic acid, citraconic acid, aconitic acid, fumaric acid, tricarboxyethylene anhydride and maleic anhydride.

3. The process according to either of claims 1 and 2, where the one or more crosslinking agents (b) has/have been selected from the group of polyols, e.g. ethylene glycol, polyethylene glycol such as diethylene glycol, triethylene glycol and tetraethylene glycol, propylene glycol, polypropylene glycol, such as dipropylene glycol, tripropylene glycol or tetrapropylene glycol, 1,3-butanediol, 1,4-butanediol, 1,5-pentanediol, 2,4-pentanediol, 1,6-hexanediol, 2,5-hexanediol, glycerol, polyglycerol, trimethylolpropane, polyoxypropylene, oxyethylene-oxypropylene block copolymers, sorbitan fatty acid esters, polyoxyethylenesorbitan fatty acid esters, pentaerythritol, polyvinyl alcohol, and sorbitol, aminoalcohols, e.g. ethanolamine, diethanolamine, triethanolamine or propanolamine, polyamine compounds, e.g. ethylenediamine, diethylenetetramine, triethylenetetramine, tetraethylenepentamine or pentaethylenehexamine, N,N,N,N-tetrakis(2-hydroxyethyl)ethylenediamine (THEED), N,N,N,N-tetrakis(2-hydroxyethyl)adipamide (THEAA), triisopropanolamine (TRIPA), polyglycidic ether compounds, such as ethylene glycol diglycidyl ether, polyethylene glycol diglycidyl ether, glycerol polyglycidyl ether, pentaerythritol polyglycidyl ether, propylene glycol diglycidyl ether, polypropylene glycol diglycidyl ether, neopentyl glycol diglycidyl ether, hexanediol glycidyl ether, trimethylolpropanol glycidyl ether, sorbitol polyglycidyl ether, phthalic acid diglycidyl ether, adipic acid diglycidyl ether, glycidol, polyisocyanates, preferably diisocyanates, such as toluene 2,4-diisocyanate and hexamethylene diisocyanate, polyaziridine compounds, such as 2,2-bishydrnxymethylbutanol tris[3-(1-aziridinyl)propionate], 1,6-hexamethylenediethyleneurea and diphenylmethanebis-4,4'-N,N'-diethyleneurea, halogen peroxides such as epichlorohydrin and epibromohydrin and α-methylepichlorohydrin, alkylene carbonates such as 1,3-dioxolan-2-one ethylene carbonate, 4-methyl-1,3-dioxolan-2-one(propylene carbonate), polyquaternary amines such as condensates of dimethylamines and epichlorohydrin, di-, tri- and polyamines and polyol compounds having at least two hydroxy groups.

4. The process according to any of claims 1 to 3, where, in process step (i), the amount used of the monomers A1 is from 50 to 99% by weight and the amount used of the monomers A2 is from 1 to 50% by weight.

5. The process according to any of claims 1 to 4, where a nucleating agent is used during the reaction of the reaction mixture (a) with the one or more crosslinking agents (b).

6. The process according to claim 5, where talc is used as nucleating agent.

7. The process according to any of claims 1 to 6, where the foamable copolymers are foamed in a further process step.

8. The process according to claim 7, where the foamable copolymers are foamed at a temperature of from 50 to 300°C.

9. The process according to claim 7, where the foamable copolymers are foamed with exposure to microwave radiation.

10. A foamable copolymer that can be produced by the process according to any of claims 1 to 6.

11. A polymer foam whose density is from 40 to 200 g/l, that can be prepared according to any of claims 7 to 9.

## Revendications

1. Procédé de fabrication de copolymères moussables, comprenant les étapes :
(i) la fabrication d'au moins un mélange réactionnel (a) par copolymérisation radicalaire d'un ou de plusieurs composés monomères monoéthyléniquement insaturés (monomères A1) avec un ou plusieurs composés choisis dans le groupe constitué par l'acide itaconique, l'acide mésaconique, l'acide fumarique, l'acide maléique, l'acide aconitique, l'acide glutaconique, ainsi que leur sels, esters et anhydrides (monomères A2), et
(ii) la mise en réaction d'au moins un des copolymères obtenus à l'étape (i) d'un poids moléculaire moyen en nombre de 15 000 à 5 000 000 g/mol avec un ou plusieurs agents de réticulation (b) qui comprennent au moins deux groupes fonctionnels pouvant réagir avec des groupes fonctionnels libres des copolymères contenus dans le mélange réactionnel (a) par une réaction de condensation ou d'addition, le rapport en poids entre le mélange réactionnel (a) et l'agent de réticulation (b) étant de 1:10 et 100:1.

2. Procédé selon la revendication 1, dans lequel le ou les composés monoéthyléniquement insaturés (monomères A1) sont choisis dans le groupe constitué par le styrène, l'α-méthylstyrène, l'o-chlorostyrène, le chlorure de vinyle, le chlorure de vinylidène, l'acétate de vinyle, le (méth)acrylate de méthyle, le propionate de vinyle, le n-butyrate de vinyle, le laurate de vinyle, le stéarate de vinyle, l'acide itaconique, l'acrylonitrile, le méthacrylonitrile, le dinitrile de l'acide fumarique, le dinitrile de l'acide maléique, le 1,3-butadiène (butadiène), l'isoprène, l'acrylamide, le méthacrylamide, l'acide vinylsulfonique, l'acide acrylique, l'acide méthacrylique, l'acide maléique, l'acide éthacrylique, l'acide α-chloracrylique, l'acide α-cyanoacrylique, l'acide β-méthylacrylique (acide crotonique), l'acide α-phénylacrylique, l'acide β-acryloxypropionique, l'acide sorbique, l'acide α-chlorosorbique, l'acide 2'-méthylisocrotonique, l'acide cinnamique, l'acide p-chlorocinnamique, l'acide β-stéarylique, l'acide citraconique, l'acide aconitique, l'acide fumarique, l'anhydride de tricarboxyéthylène et de l'acide maléique.

3. Procédé selon l'une quelconque des revendications 1 ou 2, dans lequel le ou les agents de réticulation (b) sont choisis dans le groupe constitué par les polyols, par exemple l'éthylène glycol, le polyéthylène glycol tel que le diéthylène glycol, le triéthylène glycol et le tétraéthylène glycol, le propylène glycol, le polypropylène glycol tel que le dipropylène glycol, le tripropylène glycol ou le tétrapropylène glycol, le 1,3-butanediol, le 1,4-butanediol, le 1,5-pentanediol, le 2,4-pentanediol, le 1,6-hexanediol, le 2,5-hexanediol, la glycérine, la polyglycérine, le triméthylolpropane, le polyoxypropylène, les copolymères séquencés d'oxyéthylène-oxypropylène, les esters d'acides gras de sorbitane, les esters d'acides gras de polyoxyéthylène-sorbitane, la pentaérythrite, l'alcool polyvinylique et le sorbitol, les aminoalcools, par exemple l'éthanolamine, la diéthanolamine, la triéthanolamine ou la propanolamine, les composés de polyamine, par exemple l'éthylène-diamine, la diéthylène-tétraamine, la triéthylène-tétraamine, la tétraéthylène-pentamine ou la pentaéthylène-hexaamine, la N,N,N,N-tétrakis(2-hydroxyéthyl)éthylène-diamine (THEED), le N,N,N,N-tétrakis(2-hydroxyéthyl)adipamide (THEAA), la triisopropanolamine (TRIPA), les composés d'éther polyglycidylique tels que l'éther diglycidylique d'éthylène glycol, l'éther diglycidylique de polyéthylène glycol, l'éther polyglycidylique de glycérine, l'éther polyglycidylique de pentaérythrite, l'éther diglycidylique de propylène glycol, l'éther diglycidylique de polypropylène glycol, l'éther diglycidylique de néopentylglycol, l'éther glycidylique d'hexanediol, l'éther glycidylique de triméthylolpropane, l'éther polyglycidylique de sorbitol, l'éther diglycidylique de l'acide phtalique, l'éther diglycidylique de l'acide adipique, le glycidol, les polyisocyanates, de préférence les diisocyanates tels que le 2,4-diisocyanate de toluène et le diisocyanate d'hexaméthylène, les composés de polyaziridine tels que le propionate de 2,2-bis-hydroxyméthylbutanol-tris[3-(1-aciridinyle)], la 1,6-hexaméthylène-diéthylène-urée et la diphénylméthane-bis-4,4'-N,N'-diéthylène-urée, les peroxydes d'halogène tels que l'épichloro- et épibromohydrine et l'α-méthylépichlorohydrine, les carbonates d'alkylène tels que le carbonate de 1,3-dioxolan-2-one(éthylène), le carbonate de 4-méthyl-1,3-dioxolan-2-one(propylène), les amines polyquaternaires telles que les produits de condensation de diméthylamines et d'épichlorohydrine, les di-, tri- et polyamines, ainsi que les composés de polyol contenant au moins deux groupes hydroxyle.

4. Procédé selon l'une quelconque des revendications 1 à 3, dans lequel, à l'étape de procédé (i), les monomères A1 sont utilisés en une quantité de 50 à 99 % en poids et les monomères A2 en une quantité de 1 à 50 % en poids.

5. Procédé selon l'une quelconque des revendications 1 à 4, dans lequel un agent de nucléation est utilisé lors de la mise en réaction du mélange réactionnel (a) avec le ou les agents de réticulation (b).

6. Procédé selon la revendication 5, dans lequel le talc est utilisé en tant qu'agent de nucléation.

7. Procédé selon l'une quelconque des revendications 1 à 6, dans lequel les copolymères moussables sont moussés lors d'une étape de procédé supplémentaire.

8. Procédé selon la revendication 7, dans lequel les copolymères moussables sont moussés à une température de 50 à 300 °C.

9. Procédé selon la revendication 7, dans lequel les copolymères moussables sont moussés sous l'effet d'un rayonnement micro-onde.

10. Copolymères moussables pouvant être fabriqués par le procédé selon l'une quelconque des revendications 1 à 6.

11. Mousse polymère d'une densité de 40 à 200 g/l, pouvant être fabriquée selon l'une quelconque des revendications 7 à 9.
